Europäisches Patentamt

European Patent Office

Office européen des brevets

(11) Publication number: **0 290 134**
**B1**

(12) **EUROPEAN PATENT SPECIFICATION**

(45) Date of publication of the patent specification:
25.04.90

(51) Int. Cl.⁴: **B23K 20/12, F01D 5/30**

(21) Application number: **88302810.2**

(22) Date of filing: **30.03.88**

(54) Oscillating mechanism.

(30) Priority: **16.04.87 GB 8709286**

(43) Date of publication of application:
**09.11.88 Bulletin 88/45**

(45) Publication of the grant of the patent:
**25.04.90 Bulletin 90/17**

(84) Designated Contracting States:
**DE ES FR GB**

(56) References cited:
**DE-B- 1 169 749**
**DE-C- 596 469**

(73) Proprietor: **ROLLS-ROYCE plc, 65 Buckingham Gate, London, SW1E 6AT(GB)**

(72) Inventor: **Goddard, John, 29 Tilting Road, Thornbury Bristol(GB)**

(74) Representative: **Bird, Vivian John, Rolls-Royce plc PO Box 3, Filton, Bristol BS12 7QE(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

ACTORUM AG

## Description

This invention relates to a mechanism for oscillating an object along an arcuate path and for stopping the object precisely at a predetermined point along the arcuate path.

In gas turbine engines there is a need to weld preformed aerofoil shaped blades to the periphery of a disc to produce what is known as a blisk. One method of welding such blades to the periphery of the disc is friction welding. In friction welding, the inner end of the aerofoil blade is held in contact with the periphery of the disc and oscillated in the axial direction to heat the inner end of the aerofoil and a localised region of the periphery of the disc until they become plastic. As soon as they become plastic the oscillation of the blade is stopped and the blade is pushed radially inwards to effect the weld. Although friction welding is a simple and effective method of welding there is a fundamental problem that has eluded many previous attempts to achieve a successful technique.

Basically the problem resides in devising a device for oscillating the blade at say 3000 oscillations per minute with loads (normal and parallel to the surfaces) of about 5 to 15 tons with an amplitude of a few millimetres (eg 4mm), and stopping the oscillation of the blade instantly at exactly the same axial position so that all the blades lie between the same axial planes.

A further complication resides in the fact that it is preferable to oscillate the blade along an arcuate path because the shape of the inner end of the aerofoil blade is predominantly curved.

An object of this invention is to provide a mechanism which is capable of oscillating a blade along an arcuate path and stopping it precisely along the, path. Such a mechanism preferably includes a linkage which translates continuous rotary motion into reciprocating arcuate motion. A suitable such linkage is disclosed in DE-B 1 169 749.

The invention as claimed enables the oscillation of the object to be stopped precisely by timing the movement of the actuator lever to bring the pivot between the third link and the actuator lever in line with the pivot between the second link and the second member.

Two embodiments of the present invention will now be described, by way of examples with reference to the accompanying drawings, in which:

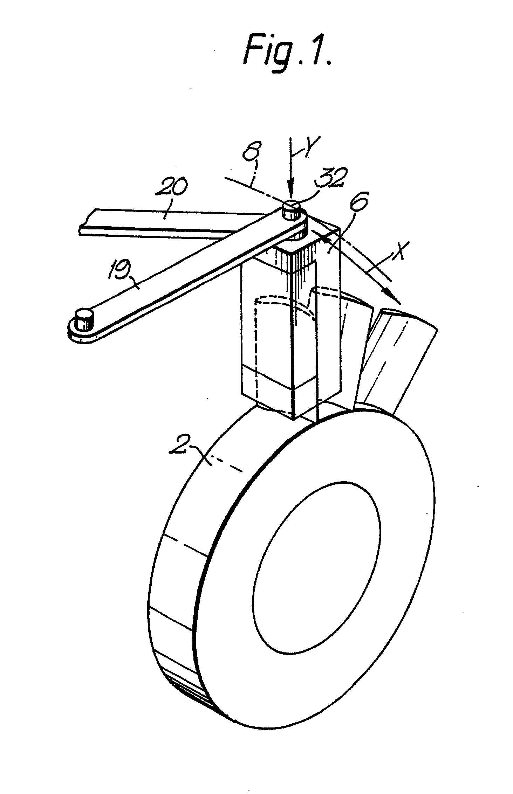

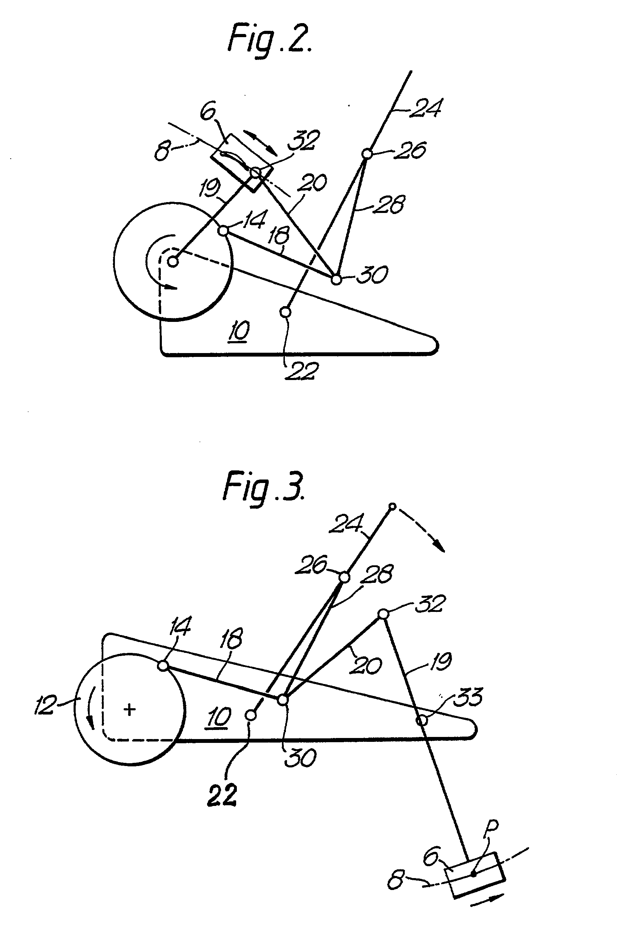

Figure 1 illustrates schematically a method of friction welding blades to a disc, and Figures 2 not covered by the claims and 3 show two mechanisms constructed in accordance with the present invention.

Referring to Figure 1, there is shown a metal disc 2 to the periphery of which it is desired to weld a plurality of equispaced aerofoil shaped blades. Each blade is held in contact with the periphery of the disc 2 by means of a clamp 6 operated by the mechanism shown in figure 2 or figure 3.

The blade is oscillated along an arcuate path 8 which is approximately of the same radius as the radius of curvature of the blade to be welded.

The clamp is moved with a force X of between 5 and 15 tons and a force Y of 5 to 15 tons is applied radially inwards to cause frictional heating. As soon as the surfaces are plastic the blade and the disc are urged together radially a predetermined amount to form an upset and effect the welding.

It is imperative that all the leading edges of the blades are accurately located relative to each other so that the blades lie parallel to each other between common axial planes.

Referring to Figure 2, there is shown a base 10 on which is rotatably mounted a first member (flywheel 12) having an eccentrically mounted crank pin 14. Pivotally mounted on the crank pin 14 is a first link 18.

The base 10 is also provided with a second member 19 pivotally mounted on pivot 33 and which is approximately the same length as the radius of curvature of the blade to be welded. Pivotally connected to the end of the link 18 remote from the crank pin 14 at a pivotal interconnection 30 is a second link 20. The other end of the link 20 is pivotally connected to the free end of the second member 19 at pivot 32.

Pivotally mounted on base 10 (on pivot 22) is an actuator lever 24. The actuator lever 24 is provided near an end remote from pivot 22 with a pivot 26, to which is pivotally mounted a third link 28 of equal length to the link 20.

The other end of the link 28 remote from pivot 26 is pivotally connected to the links 18 and 20 at their pivotal interconnection 30. The pivot 22 is located relative to the length of link 18 and the radius of the crank pin 14 from the centre of rotation of the flywheel 12 so that the locus of the pivot 30 passes over the lever 24 as the flywheel 12 rotates. The blade to be oscillated during the friction welding is mounted in the clamp 6 which is mounted on the pivot 32 at the end of the member 19.

Rotation of the flywheel 12 causes the pivot 32 to be oscillated in an arcuate path when the actuator lever 24 is in the position shown in figure 2. Rotation of the lever 24 about its pivotal axis 22 is used to freeze the arcuate motion of the pivot 32.

Movement of the actuator lever 24 may be synchronised with the rotation of the flywheel 12 (but need not be) so that the oscillation of the pivot 32 can be stopped precisely by decreasing the amplitude of the oscillation without stopping the rotation of the flywheel 12. When the pivot 26 is co-axially aligned with the pivot 32 the pivot 32 stops oscillating at a point along the path of oscillation (ie over the same zone of frictional heating). This occurs at the intersection of the loci of pivots 26 and 32. Thereafter, the pivot 30 follows an arcuate path about the pivot 26 whilst pivot 26 remains stationary. We prefer to strobe, or time, the movement of the lever 24 relative to the rotational speed of the flywheel 12 so as to initiate movement of the lever 24, to bring the pivot 26 in line with the pivot 32 the instant that the pivot 30 coincides with pivot 22.

Referring to Figure 3 there is shown a second embodiment of the invention. The same reference number have been used for the same parts shown in figure 2.

As will be seen, the second member 19 is mounted to pivot about an axis 33 intermediate its ends. The blade carrier 6 is provided at one end of the second member 19 (not at the pivot 32) at a radius from the pivot 33 equal to the radius of curvature of the blade to be welded. Rotation of the flywheel 12 drives the carrier along an arcuate path and movement of the lever 24 (to bring the pivot 26 into alignment with the pivot 32) freezes the motion of the carrier 6. The exact position p along the total arc of movement is proportional to the ratio of length of the first link 18 to the length of the second link 20, and would be mid-way along the arc for links of equal length.

The actual location of the axis 33 relative to the axis of rotation of the first member 12 is not critical.The axis 33 could be located so that at a midpoint in the travel of the mechanism the second link 20 is normal to the second member 19.

If desired, a brake could be applied to the flywheel 12 when moving the lever 24 thereby to decrease the frequency of oscillation of the pivot 32 whilst at the same time decreasing the amplitude of the oscillation. In this way the frequency can be accurately controlled.

## Claims

1. A mechanism (10) for oscillating an object along a path and for stopping the object at a predetermined point along that path, the mechanism (10) comprising:
a) a first member (12) mounted for rotation about a first axis;
b) a crank pin (14) mounted eccentrically on the first member (12) with respect to said first axis;
c) a first link (18) pivotally mounted at one end to the crank pin (14);
d) a second axis (33) fixed in relation to said first axis;
e) a second member (19) mounted for pivotal movement about the second axis (33) and having means (6) adapted to carry the object along the arcuate path;
f) a pivotal interconnection (30) located at an end of the first link (18) opposed to the crank pin (14);
g), a first pivot (32) located at an end of the second member (19) distal to the second axis (33);
h) a third axis or pivot (22) fixed in relation to said first axis and the second axis (33);
i) an actuator lever (24) pivotally connected at one end to the third axis (22);
j) a second pivot (26) located on the actuator lever (24) and distal from the third axis (22);
k) a second link (20) pivotally connected at one end to the pivotal interconnection (30) and at the other end to the first pivot (32);
l) a third link (28) pivotally mounted at one end to the pivotal interconnection (30) and at the other end to the second pivot (26), the third link (28) being of the same length as the second link (20);
The actuator lever (24) being rotable about the third axis (22) during the rotation of the first member (12) about its axis to a position where the locus of the second pivot (26) about the third axis (22) intersects the locus of the first pivot (32) as the second member (19) pivots about the second axis (33), thereby to stop the oscillation of the object along the arcuate path, characterised in that the locus of the pivotal interconnection (30) during the rotation of the first member (12), passes over the actuator lever (24) which is timed relative to the rotation speed of the first member (12) so as to initiate the movement of the actuator lever (24) so as to cause the second pivot (26) to be aligned with the first pivot (32) when the pivotal interconnection (30) is coincident with the actuator lever (24).

2. A mechanism (10) as claimed in claim 1 characterised in that the locus of the pivotal interconnection (30) intersects the third axis (22).

3. A mechanism (10) as claimed in claim 1 characterised in that the first and second axes are the same axis.

4. A friction welding apparatus incorporating the mechanism (10) claimed in any preceding claim.

## Revendications

1. Mécanisme (10) pour faire osciller un objet le long d'un parcours et pour arrêter l'objet en un point prédéterminé le long du parcours, le mécanisme (10) comprenant:
a) un premier organe (12) monté de façon rotative autour d'un premier axe;
b) un axe de manivelle (14) monté excentriquement sur le premier organe (12) par rapport audit premier axe;
c) une première bielle (18) montée de façon pivotante à une extrémité de l'axe de manivelle (14);
d) un second axe (33) fixé en relation avec ledit premier axe;
e) un second organe (19) monté de façon à effectuer un mouvement de pivotement autour du second axe (33) et comprenant des moyens (6) adaptés à supporter l'objet le long du parcours courbe;
f) une interconnexion de pivotement (30) située à une extrémité de la première bielle (18) qui est à l'opposé de l'axe de manivelle (14);
g) un premier pivot (32) situé à une extrémité du second organe (19) qui est éloignée du second axe (33);
h) un troisième axe ou pivot (22) fixé en relation avec ledit premier axe et le second axe (33);
i) un levier d'actionnement (24) relié de façon. pivotante à une extrémité du troisième axe (22);
j) un second pivot (26) situé sur le levier d'actionnement (24) et éloigné du troisième axe (22);
k) une seconde bielle (20) reliée de façon pivotante à une extrémité à l'interconnexion de pivotement (30) et à l'autre extrémité au pivot (32);
l) une troisième bielle (28) montée de façon pivotante à une extrémité à l'interconnexion de pivotement (30) et à l'autre extrémité au second pivot (26), la troisième bielle (28) étant de même longueur que la seconde bielle (20);
le levier d'actionnement (24) pouvant tourner autour du troisième axe (22) pendant la rotation du premier organe (12) autour de son axe jusqu'à une position où le lieu géométrique du second pivot (26) autour du troisième axe (22) coupe le lieu géométrique du premier pivot (32) quand le second organe (19) pivote autour du second axe (33), de manière à arrêter les oscillations de l'objet le long du parcours courbe. caractérisé en ce que le lieu géométrique de l'interconnexion de pivotement (30) pendant la rotation du premier organe (12) passe sur le levier d'actionnement (24) qui est synchronisé par rapport à la vitesse de rotation du premier organe (12) de manière à initier le mouvement du levier d'actionnement (24) de façon à amener le second pivot (26) en alignement avec le premier pivot (22) quand l'interconnexion de pivotement (30) coïncide avec le levier d'actionnement (24).

2. Mécanisme (10) selon la revendication 1, caractérisé en ce que le lieu géométrique de l'interconnexion de pivotement (30) coupe le troisième axe (22).

3. Mécanisme (10) selon la revendication 1, caractérisé en ce que les premier et second axes sont le même axe.

4. Dispositif de soudage par friction incorporant le mécanisme (10) selon l'une quelconque des revendications précédentes.

**Patentansprüche**

1. Mechanismus (10) zum hin- und hergehenden Bewegen eines Gegenstands längs einer Bahn und zum Anhalten des Gegenstands an einer vorgegebenen Stelle längs dieser Bahn, wobei der Mechanismus (10) aufweist:

a) ein erstes, um eine erste Achse drehbar angeordnetes Bauteil (12),

b) einen Kurbelzapfen (14), der mit Bezug auf die erste Achse exzentrisch auf dem ersten Bauteil (12) angeordnet ist,

c) ein mit einem Ende am Kurbelzapfen (14) schwenkbar angelenktes erstes Glied (18),

d) eine bezüglich der ersten Achse feststehende zweite Achse (33),

e) ein um die zweite Achse (33) schwenkbar angeordnetes zweites Bauteil (19), das Mittel (6) zum Befördern des Gegenstands entlang der bogenförmigen Bahn aufweist,

f) eine an dem bezüglich des Kurbelzapfens (10) gegenüberliegenden Ende des ersten Gliedes befindliche Gelenkverbindung (30),

g) ein an einem von der zweiten Achse (33) entfernten Ende des zweiten Bauteils (19) gelegenes erstes Gelenk (32),

h) eine dritte Achse bzw. Drehgelenk (22) mit bezüglich der ersten Achse und der zweiten Achse feststehender Anordnung,

i) einem mit einem Ende drehbar mit der dritten Achse (22) verbundenen Betätigungshebel (24), j) ein zweites, auf dem Betätigungshebel (24) gelegenes und von der dritten Achse (22) entferntes Drehgelenk (26),

k) ein zweites, drehbar mit einem Ende mit der Gelenkverbindung (30) verbundenes und mit dem anderen Ende mit dem ersten Drehgelenk (32) verbundenes Glied (20),

l) ein drittes, mit einem Ende mit der Gelenkverbindung (30) verbundenes und mit dem anderen Ende mit dem zweiten Drehgelenk (26) verbundenes Glied (28), das gleiche Länge wie das zweite Glied (20) hat,

wobei der Betätigungshebel (24) um die dritte Achse (22) drehbar ist, während die Drehung des ersten Bauteils (12) um seine Achse in eine Position erfolgt, wo die Bahn des zweiten Drehgelenks (26) um die dritte Achse (22) die Bahn des ersten Drehgelenks (32) beim Drehen des zweiten Bauteils (19) um die zweite Achse (33) schneidet, derart, daß die Hin- und Herbewegung des Gegenstands längs der bogenförmigen Bahn angehalten wird, dadurch gekennzeichnet, daß der jeweilige Ort der Gelenkverbindung (30) während der Drehung des ersten Bauteils (12) sich über den Betätigungshebel (24) bewegt, der relativ zur Drehgeschwindigkeit des ersten Bauteils (12) so zeitgesteuert ist, daß er die Bewegung des Betätigungshebels (24) so einleitet, daß eine Ausrichtung des zweiten Drehgelenks (26) mit dem ersten Drehgelenk (32) bewirkt wird, wenn die Gelenkverbindung (30) mit dem Betätigungshebel (24) koinzident ist.

2. Mechanismus (10) nach Anspruch 1, dadurch gekennzeichnet, daß die Bahn der Gelenkverbindung (30) die dritte Achse (22) schneidet.

3. Mechanismus (10) nach Anspruch 1, dadurch gekennzeichnet, daß die erste Achse und die zweite Achse ein und dieselbe Achse sind.

4. Reibschweißvorrichtung mit dem Mechanismus (10) nach einem der vorhergehenden Ansprüche.

# Fig.1.

## Fig.2.

## Fig.3.